**Europäisches Patentamt**

**European Patent Office**

**Office européen des brevets**

(19)

(11) Veröffentlichungsnummer: **0 124 472**
**B1**

(12)

# EUROPÄISCHE PATENTSCHRIFT

(45) Veröffentlichungstag der Patentschrift :
**07.06.89**

(21) Anmeldenummer : 84730028.2

(22) Anmeldetag : 27.03.84

(51) Int. Cl.⁴ : **F 16 F  15/02**, F 16 M  7/00,
**F 16 L  3/16**

(54) **Beheizbarer viskoser Dämpfer.**

(30) Priorität : 21.04.83 DE 3314203

(43) Veröffentlichungstag der Anmeldung :
**07.11.84 Patentblatt 84/45**

(45) Bekanntmachung des Hinweises auf die Patenterteilung : 07.06.89 Patentblatt 89/23

(84) Benannte Vertragsstaaten :
**AT BE CH FR GB IT LI LU NL SE**

(56) Entgegenhaltungen :
DE--A-- 1 921 502
DE--B-- 1 214 551
FR--A--   726 544
FR--A-- 1 091 681
FR--A-- 1 355 174
FR--A-- 1 388 388
FR--A-- 1 577 483
FR--A-- 2 369 463
US--A-- 4 057 212

(73) Patentinhaber : GERB Gesellschaft für Isolierung
mbH & Co. KG
Roedernallee 174-176
D-1000 Berlin 51 (DE)

(72) Erfinder : Zoellner, Kurt
Sachsenwaldstrasse 49
D-2055 Aumühle (DE)

(74) Vertreter : Wey, Hans-Heinrich, Dipl.-Ing. et al
Patentanwälte Wey & Partner Widenmayerstrasse 49
D-8000 München 22 (DE)

EP 0 124 472 B1

## Beschreibung

Die vorliegende Erfindung betrifft einen beheizbaren viskosen Dämpfer der im Oberbegriff des Anspruchs 1 angegebenen Art.

Ein derartiger beheizbarer viskoser Dämpfer ist beispielsweise aus der FR-A-2 369 463 bekannt. Wenn ein derartiger Dämpfer ungeschützt im Freien stehen und/oder mit Temperaturen unter 10 °C gerechnet werden muß, so ist eine Beheizung notwendig, um das Einfrieren des Dämpfers zu verhindern. Die Regelung erfolgt dann ausschließlich in Abhängigkeit von der Außentemperatur. In der Praxis treten jedoch bei vielen Maschinenarten, die schwingungsisoliert aufzustellen sind, je nach Betriebsart unterschiedliche Schwingungsanregungen auf. Diese erfordern bei gleicher Elastizität eine unterschiedliche Dämpfungswirkung. Beispielsweise können auf einer Stanze Kupferbleche, Stahlbleche oder Federbandstahl gestanzt werden. Die dabei auftretenden Schwingungsanregungen sind so unterschiedlich, daß mit den bekannten beheizbaren viskosen Dämpfern eine optimale Schwingungsisolierung für jede der drei genannten Bearbeitungsarten nur dadurch erreicht werden kann, daß die Dämpfung an die entsprechenden Erfordernisse angepaßt wird. Schmiedehämmer wiederum bedürfen einer vollständig anderen Dämpfung. Schmiedehämmer werden mit einer relativ konstanten Schlagenergie betrieben, die zur Verformung eines Werkstücks genutzt wird. Die Wirkung der Schlagenergie ist impulsförmig, wobei die Impulsform und vor allem die Wirkdauer des Impulses in starkem Maß vom Werkstück abhängt. So ist beispielsweise die Bearbeitung eines relativ hohen Materialstücks durch Schlaghämmer, wie beispielsweise ein Achsschenkelbolzen, das beim Schlag erheblich an Höhe verliert, mit einer langen Impulsdauer verbunden. Zur optimalen Schwingungsisolierung ist hier bei gleicher Elastizität ein anderes Dämpfungsmaß erforderlich als bei flachen Schmiedestücken, wie beispielsweise Rohrflanschen, bei denen ein Impuls mit hohem Spitzenwert und kurzer Wirkdauer ansteht.

Der Erfindung liegt die Aufgabe zugrunde, die Dämpfungswirkung eines eingangs genannten beheizbaren viskosen Dämpfers an die dynamischen Anforderungen des zu dämpfendes Objekts anzupassen.

Durch die erfindungsgemäß vorgesehene Beheizung des Dämpfungsmediums des viskosen Dämpfers in Abhängigkeit vom Kraft- und Bewegungssignal des schwingenden Objekts wird erreicht, daß die Schwingungen des zu dämpfenden Objekts stets an die dynamischen Anforderungen angepaßt sind.

Aus der FR-A-726 544 ist es bei einem Hydraulikdämpfer grundsätzlich bekannt, das Hydrauliköl zu beheizen, um Schwankungen in der Umgebungstemperatur auszuschalten bzw. die Dämpfungseigenschaften zu beeinflussen.

Vorteilhafte Weiterbildungen der Erfindung sind in den Unteransprüchen angegeben.

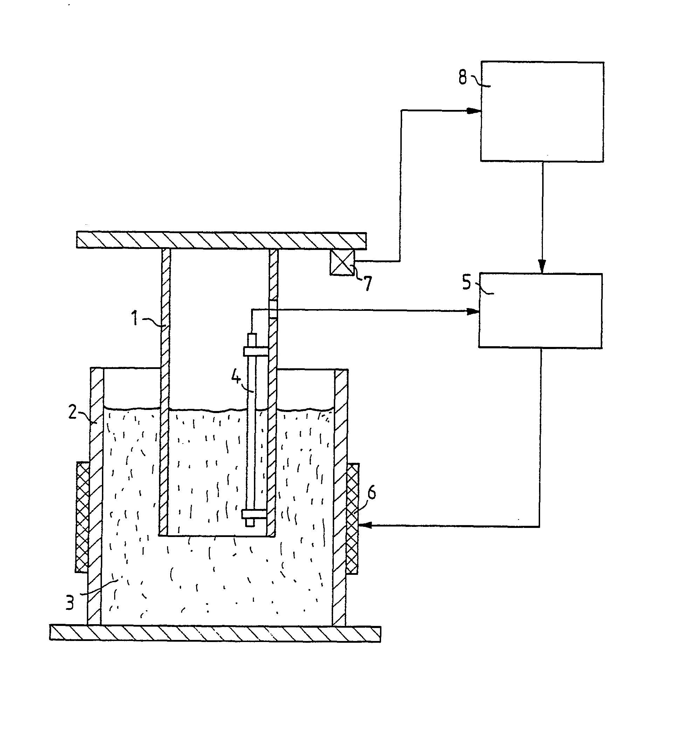

Nachstehend wird die Erfindung anhand der Zeichnung näher erläutert; die einzige Figur der Zeichnung zeigt einen beheizbaren viskosen Dämpfer mit erfindungsgemäß dynamisch geregelter Heizung.

Der beheizbare viskose Dämpfer besteht aus einem Dämpferstempel 1, einem Dämpfergehäuse 2 und einem Dämpfungsmedium 3, welches ein Stoff mit stark temperaturabhängigen, viskoelastischen Eigenschaften ist. Solche Dämpfungsmedien sind mit bituminösen Stoffen realisierbar, welche die gewünschten Eigenschaften bei einer üblicherweise etwa 10 bis 20 °C über der Umgehungstemperatur liegenden Temperatur haben.

Die Temperatur des Dämpfungsmediums 3 wird mit einem am Dämpferstempel 1 nahe der Wandung angebrachten Temperaturfühler 4 gemessen. Das Meßsignal wird einem Regler 5 zugeführt, der am Dämpfer eine Heizung 6 in Gang setzt, so daß eine am Temperaturregler 5 gewählte Mediumstemperatur konstant gehalten wird.

Zur Anpassung an die in der Praxis auftretenden unterschiedlichen dynamischen Erfordernisse schwingender Systeme ist es vorgesehen, die Schwingungsantwort des Systems mit einem Meßgeber 7 zu messen und in einem Zwischenglied 8 zu verarbeiten. Nach dem Bewerten des Meßsignals wird vom Zwischenglied 8 ein Signal an den Temperaturregler 5 gegeben, welcher die Beheizung 6 des Dämpfers bewirkt oder eine weitere Abkühlung zuläßt. Im Prinzip ist es dabei nicht notwendig, daß der Temperaturfühler 4 ein Teil der Regelung ist.

Es ist vorgesehen, den Meßgeber 7 an die Schwinggröße anzupassen, also entweder den Schwingweg, die Geschwindigkeit, die Beschleunigung oder auch die übertragene Kraft zu messen. Auch das Zwischenglied 8 kann in unterschiedlichster Weise ausgestaltet sein. So kann es beispielsweise neben mathematischen Umformungen, wie Verstärkung, Integrationen oder Differentiationen, um aus dem Gebersignal die geforderte Meßgröße zu erhalten, beispielsweise auch Grenzwerte melden, Mittelwerte bilden, Fourier-Transformationen vornehmen und den Schwingungsvorgang frequenzmäßig bewerten.

Der hohe wirtschaftliche Nutzen des soeben beschriebenen beheizbaren viskosen Dämpfers besteht also darin, daß die Dämpfung an die jeweiligen Erfordernisse der Schwingungsantwort des schwingenden Systems bei veränderten Signalformen der Schwingungsanregung angepaßt ist.

## Patentansprüche

1. Beheizbarer viskoser Dämpfer, insbesondere zur Schwingungsdämpfung von Maschinen und Rohrleitungen, bestehend aus einem mit einem viskoelastischen Dämpfungsmedium (3) gefüllten Dämpfergehäuse (2) und einem in das Dämpfungsmedium hineinragenden Dämpferstempel (1), wobei die Eigenschaften des Dämpfungsmediums (3) stark temperaturabhängig sind und dessen zur Dämpfung erforderliche Viskosität bei Betriebstemperaturen erreicht wird, die über der Umgebungstemperatur liegen und durch eine Heizung (6) aufrechterhalten werden, gekennzeichnet durch einen Heizregelkreis mit einem Temperaturfühler (4) für das Dämpfungsmedium (3), einem Regler (5) und einem Meßgeber (7), mit dem vom schwingenden Objekt ein Kraft- und Bewegungssignal abgenommen und in einem Zwischenglied (8) bewertet wird, mit dem der Regler (5) beaufschlagt ist.

2. Beheizbarer viskoser Dämpfer nach Anspruch 1, dadurch gekennzeichnet, daß der Temperaturfühler (4) am Dämpferstempel (1) nahe der Wandung angebracht ist.

3. Beheizbarer viskoser Dämpfer nach Anspruch 1 oder 2, dadurch gekennzeichnet, daß die Dämpfungsmedien (3) bituminöse Stoffe sind.

## Claims

1. Heatable viscous damper, in particular for damping of vibrations of machines and piping, consisting of a damper housing (2) filled with a viscoelastic damping medium (3) and a damping plunger (1) extending into the damping medium, with the properties of the damping medium (3) being strongly temperature-dependent and the viscosity thereof required for the damping being achieved at operating temperatures which lie above the temperature of the surrounding environnent and being maintained by means of heating (6), characterised by a heating control circuit with a temperature sensor (4) for the damping medium (3), a regulator (5) and a measuring apparatus (7) by means of which a force and notion signal is received from the vibrating object and is evaluated in an intermediate member (8) by means of which the regulator (5) is acted upon.

2. Heatable viscous damper according to claim 1, characterised in that the temperature sensor (4) is applied to the damper plunger (1) near the wall.

3. Heatable viscous damper according to claim 1 or 2, characterised in that the damping media (3) are bituminous substances.

## Revendications

1. Amortisseur visqueux pouvant être chauffé, notamment pour l'amortissement des oscillations des machines et des tuyauteries, comprenant un carter d'amortisseur (2) rempli d'un milieu d'amortissement (3) viscoélastique et d'un piston amortisseur (1) plongeant dans le milieu d'amortissement, les propriétés du milieu d'amortissement (3) dépendant fortement de la température et sa viscosité nécessaire pour l'amortissement étant obtenue à des températures de travail qui sont supérieures à la température ambiante et sont maintenues par un chauffage (6), caractérisé par un circuit de régulation de chauffage comprenant une sonde de température (4) du milieu d'amortissement (3), un régulateur (5) et un organe de mesure (7) recueillant un signal de mouvement et de force de l'objet oscillant qui est évalué dans un organe intermédiaire (8) alimentant le régulateur (5).

2. Amortisseur visqueux pouvant être chauffé, selon la revendication 1, caractérisé en ce que la sonde de température (4) est placée sur le piston d'amortisseur (1) au voisinage de la paroi.

3. Amortisseur visqueux pouvant être chauffé, selon la revendication 1 ou 2, caractérisé en ce que le milieu d'amortissement (3) est un produit bitumineux.